# EUROPÄISCHE PATENTSCHRIFT

(11) **EP 2 999 583 B1**
(45) Veröffentlichungstag und Bekanntmachung des Hinweises auf die Patenterteilung: **27.02.2019**
(21) Anmeldenummer: 14724488.3
(22) Anmeldetag: 19.05.2014
(51) Int. Cl.: B29C 70/48, B29C 33/38

(54) **VERFAHREN ZUM HERSTELLEN EINES WERKZEUGS FÜR DIE HERSTELLUNG EINES FASERVERBUNDBAUTEILS**
METHOD FOR PRODUCING A TOOL FOR PRODUCING A COMPOSITE FIBER COMPONENT
PROCÉDÉ DE FABRICATION D'UN OUTIL DE FABRICATION D'UN COMPOSANT EN MATIÈRE COMPOSITE RENFORCÉE PAR DES FIBRES

(30) Priorität: 23.05.2013 DE 102013209611
(43) Veröffentlichungstag der Anmeldung: 30.03.2016
(73) Patentinhaber: Bayerische Motoren Werke Aktiengesellschaft, 80809 München (DE)
(72) Erfinder: BECK, Steffen, 80997 München (DE); FUCHS, David, 84028 Landshut (DE); PASSREITER, Thomas, 94333 Geiselhöring (DE); STAUDT, Bernhard, 80797 München (DE); ESCHL, Johannes, 82194 Gröbenzell (DE)
(86) Internationale Anmeldenummer: PCT/EP2014/060230
(87) Internationale Veröffentlichungsnummer: WO 2014/187771

(56) Entgegenhaltungen:
- HOLMBERG J A ET AL: "MANUFACTURING AND PERFORMANCE OF RTM U-BEAMS", COMPOSITES, IPC BUSINESS PRESS LTD. HAYWARDS HEATH, GB, Bd. 28A, Nr. 6, 1. Januar 1997 (1997-01-01), Seiten 513-521, XP000658862, ISSN: 0010-4361
- CAMPBELL F C ED - CAMPBELL FLAKE C: "Manufacturing processes for advanced composites", 1. Januar 2004 (2004-01-01), MANUFACTURING PROCESSES FOR ADVANCED COMPOSITES, ELSEVIER ADVANCED TECHNOLOGY, OXFORD, GB, PAGE(S) 304 - 356, XP002580602, ISBN: 978-1-85617-415-2 Seite 338 - Seite 339
- MICHAELI W ET AL: "FASERVERBUNDWERKSTOFFE VERFAHRENSTECHNIK, MESSMETHODEN UND PROZESSSIMULATION", GUMMI, FASERN, KUNSTSTOFFE.INTERNATIONALE FACHZEITSCHRIFT FUR DIE POLYMER-VERARBEITUNG, GENTNER VERLAG. STUTTGART, DE, Bd. 43, Nr. 7, 1. Juli 1990 (1990-07-01), Seiten 374-380,382, XP000165341, ISSN: 0176-1625

## Beschreibung

Die vorliegende Erfindung betrifft ein Verfahren zum Herstellen eines Werkzeugs für die Herstellung eines Faserverbundbauteils, sowie ein Verfahren zum Herstellen des Faserverbundbauteils selbst.

Faserverbundbauteile zeichnen sich durch exzellente mechanische Eigenschaften und zudem, gegenüber herkömmlichen metallischen Werkstoffen, durch ein sehr geringes Eigengewicht aus. Dadurch werden Faserverbundbauteile für diverse Anwendungen in Leichtbauweise verwendet, insbesondere im Automobilbau, wo eine Gewichtseinsparung der Bauteile bei sehr guter Festigkeit und Steifigkeit im Fokus steht. Faserverbundbauteile werden zumeist durch Harzinfusionsverfahren hergestellt, wo faserhaltige Materialien, sogenannte Faserhalbzeuge, wie Gelege, Gewirke, Gestricke und dergleichen zunächst in eine Negativform eines Werkzeugs eingelegt und mit einer Folie abgedeckt und zusammen mit dieser verspannt werden. Durch Anlegen von Vakuum wird ein Matrixmaterial, meistens ein Harz, eingebracht, das das faserhaltige Material durchtränkt. Da beim Harzinfusionsverfahren nur wenig Druckgefälle auf das Harz wirkt, ergeben sich sehr lange Infusionszeiten. Da ferner das Fließverhalten des Matrixmaterials schwer steuerbar ist, ist dieses Verfahren für Faserverbundbauteile mit Wölbungen, Ecken und Vertiefungen nicht geeignet, bzw. entstehen hier oftmals Reinharzbereiche, Lufteinschlüsse und Bereiche mit unterschiedlichem Faservolumengehalt, die die Qualität des Faserverbundbauteils senken. Zudem ist dieses Verfahren sehr zeitintensiv und daher schlecht für die großtechnische Massenproduktion von Faserverbundbauteilen geeignet.

Alternativ zum Harzinfusionsverfahren finden so genannte (Hochdruck-)RTM-Verfahren oder Harz-Injektions-Verfahren Anwendung. Hier wird ein vorgeformtes faserhaltiges Material (Preform) in ein Werkzeug mit der vorgesehenen Endform des herzustellenden Faserverbundbauteils eingebracht und bei an dem Werkzeug angelegtem Vakuum ein Matrixmaterial eingespritzt, das das faserhaltige Material durchtränkt. Nach Aushärten des Matrixmaterials kann das Faserverbundbauteil aus dem Werkzeug entnommen werden. Nachteilig hieran ist, dass auch hier, gerade an Bereichen mit Wölbungen, Ecken und Vertiefungen, Reinharzbereiche und Lufteinschlüsse gebildet werden, die dadurch entstehen, dass das faserhaltige Material beim Einlegen und Drapieren in dem Werkzeug, so wie beim Schließen der Werkzeugteile, komprimiert und ggf. deformiert wird. Insbesondere an der Oberfläche des Faserverbundbauteils entsteht dann ein Matrixmaterialfilm, so dass das Faserverbundbauteil inhomogene mechanische Eigenschaften aufweist.

J. A. Holmberg et al.: "Manufacturing and performance of RTM U-beams", Composites Part A (1997), Seiten 513 bis 521, beschreibt theoretische Hintergründe zur Herstellung von Faserverbundbauteilen unter Anwendung eines RTM-Verfahrens. Hierbei spielen die Radien der Geometrie der Gießform eine besondere Rolle zur Verhinderung von Reinharzbereichen.

Ausgehend von diesem Stand der Technik ist es daher Aufgabe der vorliegenden Erfindung ein Verfahren zum Herstellen eines Werkzeugs mit mindestens einem Werkzeugoberteil, einem Werkzeugunterteil und einem dazwischenliegenden Spalt, für die Herstellung eines Faserverbundbauteils bereitzustellen, wodurch die Breite des Spalts so optimiert wird, dass ein Faserverbundbauteil mit sehr guten mechanischen Eigenschaften ohne Fehlstellen, wie Reinharzbereiche, Matrixmaterialfilme an der Oberfläche und Lufteinschlüsse, herstellbar ist. Ferner ist es Aufgabe der Erfindung ein Verfahren zum Herstellen eines Faserverbundbauteils bereitzustellen, das für die Massenproduktion geeignet ist und ein Faserverbundbauteil von hoher qualitativer Güte ohne verfahrensbedingte Inhomogenitäten erzeugt.

Die Aufgabe wird bei einem Verfahren zum Herstellen eines Werkzeugs für die Herstellung eines Faserverbundbauteils, das mindestens ein faserhaltiges Material und mindestens ein Matrixmaterial umfasst und wobei das Werkzeug mindestens ein Werkzeugoberteil, ein Werkzeugunterteil und einen dazwischenliegenden Spalt umfasst, erfindungsgemäß durch die Schritte:
a) Bestimmen der zu erwartenden Dicke des faserhaltigen Materials in mindestens einem Bereich des faserhaltigen Materials und
b) Anpassen einer Breite des Spalts des Werkzeugs gemäß der zu erwartenden theoretischen Dicke des faserhaltigen Materials in dem entsprechenden Bereich des Spalts
gelöst. Durch die Anpassung und Optimierung der Spaltbreite in Abhängigkeit der zu erwartenden Dicke des faserhaltigen Materials werden Lufteinschlüsse und Hohlräume im faserhaltigen Material und insbesondere an dessen, an die Werkzeugflächen grenzenden, Oberflächen effektiv vermieden. So kann einer Ausbildung von Reinharzbereichen und Bildung von inhomogenen Faservolumenbereichen vorgebeugt werden. Unter der zu erwartenden Dicke des faserhaltigen Materials wird erfindungsgemäß die Dicke des faserhaltigen Materials verstanden, die aus dem Verdichten und Drapieren des faserhaltigen Materials beim Einlegen desselben in das Werkzeug und Schließen des Werkzeugs resultiert. Gerade in stark gekrümmten Bereichen wirkt im Werkzeug ein hoher Kompressionsdruck auf das faserhaltige Material. Hierdurch verdichtet dieses in diesen Bereichen, während es in weniger stark gekrümmten Bereichen aufgrund der Faserauffächerung oder Aufbauschung der Fasern eine größere Dicke aufweist. Die zu erwartende Dicke kann durch Versuche praktisch bestimmt und/oder basierend auf den Eigenschaften des jeweils verwendeten faserhaltigen Materials berechnet werden. Die theoretisch zu erwartende Dicke wird in mindestens einem Bereich des faserhaltigen Materials bestimmt, kann aber vorzugsweise in mehreren Bereichen bestimmt werden, wodurch eine über die gesamte Länge des Werkzeugs optimierte Spaltbreite erhalten werden kann. Das erfindungsgemäße Verfahren ist einfach anwendbar und bedingt die Herstellung eines hoch präzisen Werkzeugs, das eine großserientaugliche Fertigung von Faserverbundbauteilen hoher qualitativer Güte erlaubt.

Die Unteransprüche beinhalten vorteilhafte Weiterbildungen und Ausgestaltungen der Erfindung.

Gemäß einer vorteilhaften Weiterbildung umfasst Schritt a) einen Schritt des Bestimmens der minimalen Dicke des faserhaltigen Materials. Die minimale Dicke des faserhaltigen Materials ist die Dicke, bei der die Fasern vor Matrixmaterialzugabe maximal dicht gepackt sind, ohne dass eine irreversible Deformation oder Schädigung der Fasern vorliegt. Die minimale Dicke ist beispielsweise durch Kompression des faserhaltigen Materials erhaltbar oder kann unter Verwendung eines Simulationsprogrammes bestimmt werden. Im ersten Fall wird beispielsweise in Vorversuchen das faserhaltige Material einem ansteigenden Druck ausgesetzt. Durch das Aufbringen des Druckes wird das faserhaltige Material komprimiert. Die minimale Dicke des faserhaltigen Materials ist dann erreicht, wenn eine weitere Drucksteigerung eine visuell erkennbare irreversible Deformation oder Schädigung des faserhaltigen Materials bewirkt. Die bei dem maximalen Druck, der noch keine Schädigung oder irreversible Deformation des faserhaltigen Materials zur Folge hat, vorliegende Dicke des Materials ist die minimale Dicke im Sinne der vorliegenden Erfindung. Diese kann einfach mittels einer Mikrometerschraube oder einem Lineal am Fasermaterial im komprimierten Zustand gemessen werden. Vorteilhaft ist ein Kompressionsversuch auf einer Universalprüfmaschine. Ein vergleichbarer Wert kann auch durch Anwendung eines alternativen Verfahrensschrittes, nämlich durch Verwendung eines entsprechenden Simulationsprogrammes erhalten werden. Hier wird der auf die Fasern wirkende Druck bestimmt, aus dem die Kompression des faserhaltigen Materials bestimmt wird. Dabei gehen insbesondere der Faservolumengehalt, die Faseranordnung, die Struktur und Zusammensetzung der Fasern, sowie deren mechanische und physikalische Eigenschaften in die Berechnung mit ein. Durch Berücksichtigung der minimalen Dicke des faserhaltigen Materials bei der Anpassung des Spalts können insbesondere Reinharzbereiche an der Oberfläche des Faserverbundbauteils besonders effektiv vermieden werden, da die Spaltbreite so gewählt wird, dass die Fasern beim Schließen des Werkzeugs in jedem Fall an der jeweiligen Werkzeuginnenoberfläche in maximaler Dichte anliegen.

Weiter vorteilhaft umfasst der Schritt a) eine Anpassung der zu erwartenden Dicke des faserhaltigen Materials, so dass Schereffekte und Dehneffekte quer zur Faser, die durch mechanische Einwirkung auf das faserhaltige Material beim Einlegen und Drapieren des faserhaltigen Materials in dem Werkzeug, also insbesondere in dem Preform-Werkzeug oder auch dem RTM-Werkzeug, eingehen, erzeugt werden. Dies ist insbesondere bei der Ausbildung gekrümmter Bereiche und im Bereich etwaiger Verspannung des faserhaltigen Materials, und somit insbesondere an den Randbereichen, vorteilhaft, da es hier zur Bildung von faservolumenreichen oder faservolumenarmen Bereichen bei nicht angepasster Bauteilwandstärke kommt. Durch dieser Phänomene dünnt das Fasermaterial in manchen Bereichen aus und reichert sich in anderen Bereichen an, was einen entscheidenden Einfluss auf den Grad der Füllung des Werkzeugspalts hat. In faserarmen Bereichen entstehen daher bevorzugt unerwünschte Reinharzbereiche und Lufteinschlüsse. Eine Berücksichtigung diese Phänomene führt zu einer optimierten Spaltbreite so dass Faserverbundbauteile mit homogener Zusammensetzung erhalten werden, die frei sind von Reinharzbereichen und Lufteinschlüssen und damit eine sehr gute Qualität aufweisen.

Ebenfalls erfindungsgemäß wird auch ein Verfahren zum Herstellen eines Faserverbundbauteils beschrieben, wobei das Faserverbundbauteil mindestens ein faserhaltiges Material und mindestens ein Matrixmaterial aufweist und in einem Werkzeug hergestellt wird, das mindestens ein Werkzeugoberteil, ein Werkzeugunterteil und einen dazwischenliegenden Spalt umfasst. Das erfindungsgemäße Verfahren wird unter Ausführung des vorstehend offenbarten Verfahrens zum Herstellen eines Werkzeugs für die Herstellung eines Faserverbundbauteils ausgeführt und umfasst die Schritte:
a) Bestimmen der zu erwartenden Dicke des faserhaltigen Materials in mindestens einem Bereich des faserhaltigen Materials,
b) Anpassen einer Breite des Spalts des Werkzeugs gemäß der zu erwartenden Dicke des faserhaltigen Materials in dem entsprechenden Bereich des Spalts,
c) Einlegen des faserhaltigen Materials in das Werkzeug,
d) Schließen des Werkzeugs und
e) Einbringen mindestens einen Matrixmaterials.

Die Verfahrensschritte a) und b) entsprechend dabei den Verfahrensschritten a) und b) des Verfahrens zum Herstellen eines Werkzeugs für die Herstellung eines Faserverbundbauteils. Durch das vorstehend beschriebene Verfahren sind Faserverbundbauteile von hoher Qualität und Güte im großtechnischen Maßstab mit hohem Durchsatz herstellbar. Dadurch, dass ein, im Hinblick auf das herzustellende Faserverbundbauteil, optimiertes Werkzeug mit im Hinblick auf die Schichtdicke des herzustellenden Faserverbundbauteils definierter, angepasster Spaltbreite, verwendet wird, wird Lufteinschlüssen, Reinharzbereichen und einer Filmbildung aus Matrixmaterial an der Oberfläche des Faserverbundbauteils vorgebeugt. Das Verfahren ist einfach und kostengünstig umsetzbar, reduziert effektiv den Änderungsaufwand an Werkzeugen wie RTM-Werkzeugen und ist aufgrund der Effizienz und zeitsparenden Verfahrensschritte für die Massenproduktion bestens geeignet. Übliche Verfahrensschritte, wie z.B. Anlegen von Vakuum zur besseren Verteilung des Matrixmaterials, Regelung der Temperatur, Aushärten des Matrixmaterials und dergleichen, können das erfindungsgemäße Verfahren komplettieren.

Vorteilhaft umfasst Schritt a) einen Schritt der Bestimmung der minimalen Dicke des faserhaltigen Materials. Diese ist wie oben definiert und kann beispielsweise durch Kompression des faserhaltigen Materials oder durch Verwendung eines Simulationsprogrammes ermittelt werden. Wie bereits ausgeführt ist die durch Kompression des faserhaltigen Materials erhaltbare minimale Dicke die Dicke des Fasermaterials, die durch Aufbringen eines Druckes erhalten wird, der gerade noch keine irreversible Deformation oder Beschädigung des faserhaltigen Materials zur Folge hat, wobei ein entsprechender Wert auch durch Verwendung geeigneter Simulationsprogramme erhältlich ist. Durch Einbeziehung dieses Wertes bei der Bestimmung der zu erwartenden theoretischen Dicke des faserhaltigen Materials und anschließende Anpassung der Spaltbreite des verwendeten Werkzeugs in Abhängigkeit dieses Wertes, können Lufteinschlüsse und Reinharzbereiche an der jeweiligen zur Werkzeuginnenoberfläche ausgerichteten Oberfläche des Faserverbundbauteils besonders gut vermieden werden. Das Matrixmaterial dringt somit hauptsächlich in die von den Fasern gebildeten Hohlräume und verteilt sich im Inneren des faserhaltigen Materials. Die für das erfindungsgemäße Verfahren zum Herstellen eines Werkzeugs für die Herstellung eines Faserverbundbauteils beschriebenen Weiterbildungen, Vorteile und erfindungsgemäßen Effekte finden auch Anwendung auf das erfindungsgemäße Verfahren zum Herstellen eines Faserverbundbauteils.

Aus den oben genannten Gründen umfasst Schritt a) vorzugsweise auch eine Anpassung der zu erwartenden theoretischen Dicke des faserhaltigen Materials, in die Schereffekte und Effekte, die durch mechanische Einwirkung auf das faserhaltige Material beim Einlegen und Drapieren des faserhaltigen Materials in dem Werkzeug erzeugt werden, eingehen. Damit können insbesondere Faserverbundbauteile mit komplexen Formen in hoher qualitativer Güte produziert werden, wobei das Verfahren auch für Prepregmaterialien verwendbar ist.

Weiter vorteilhaft ist das faserhaltige Material eine Preform oder ein Prepreg. Diese faserhaltigen Materialien lassen sich in großtechnischem Maßstab mittels des erfindungsgemäßen Verfahrens einfach ohne hohen technischen Aufwand zu Faserverbundbauteilen verarbeiten. Bei der Verwendung einer Preform zeigen sich die erfindungsgemäßen Effekte besonders deutlich, da sie einer sehr hohen Kompressibilität unterliegen, was bei üblichen Verfahren zu einem hohen Anteil von Reinharzbereichen und Lufteinschlüssen führt, die durch das erfindungsgemäße Verfahren effektiv vermieden werden. Zudem weisen Preformen hohe gestalterische Freiheitsgrade auf und sind kostengünstig in beliebiger Form erhältlich.

Gemäß einer vorteilhaften Weiterbildung umfasst die Preform mindestens eine Lage eines Fasergeleges, Fasergeflechts, Fasergewirkes oder Fasergestrickes. Diese Preformen lassen sich sehr gut in dem erfindungsgemäßen Werkzeug durch das erfindungsgemäße Verfahren zu einem Faserverbundbauteil weiterbilden, können sehr gut in beliebiger Form im Werkzeug drapiert werden, wodurch Faserverbundbauteile in gewünschte, auch komplexer, Form herstellbar sind.

Aufgrund der erfindungsgemäßen Lösungen sowie den erfindungsgemäßen Weiterbildungenergeben sich folgende Vorteile:
- das erfindungsgemäße Verfahren zur Herstellung eines Werkzeugs für die Herstellung eines Faserverbundbauteils erlaubt auf einfache und kostengünstige eise die Fertigung eines hoch präzisen Werkzeugs, das zur Herstellung von Faserverbundbauteilen mit exzellenter Qualität geeignet ist;
- das Verfahren zur Herstellung eines Faserverbundbauteils ist hocheffizient, kostengünstig und für die Massenproduktion geeignet;
- die hergestellten Faserverbundbauteile zeichnen sich durch eine hohe qualitative Güte und die Abwesenheit von Fehlstellen, wie Reinharzbereichen, Lufteinschlüssen und Oberflächenfilmen aus Matrixmaterial, aus;

Weitere Einzelheiten, Merkmale und Vorteile der Erfindung ergeben sich aus der nachfolgenden Beschreibung und den Figuren. Es zeigen:
- Figur 1: eine Schnittansicht durch einen Teil eines erfindungsgemäßen Werkzeugs,
- Figur 2: eine Schnittansicht durch ein Werkzeug zur Herstellung eines Faserverbundbauteils gemäß dem Stand der Technik,
- Figur 3: eine Schnittansicht durch ein Werkzeug zur Herstellung eines Faserverbundbauteils das gemäß einer Weiterbildung des erfindungsgemäßen Verfahrens hergestellt wurde,
- Figur 4: eine weitere Schnittansicht durch das Werkzeug aus Figur 3 und
- Figur 5: ein Diagramm zur Bestimmung der durch Kompression eines faserhaltigen Materials erhaltbaren minimalen Dicke.

In den Figuren sind nur die hier interessierenden Teile und Komponenten dargestellt, alle übrigen Elemente, beispielsweise des Werkzeugs oder der Preform sind der Übersichtlichkeit halber weggelassen. In den Figuren beziffern gleiche Bezugszeichen gleiche Bauteile.

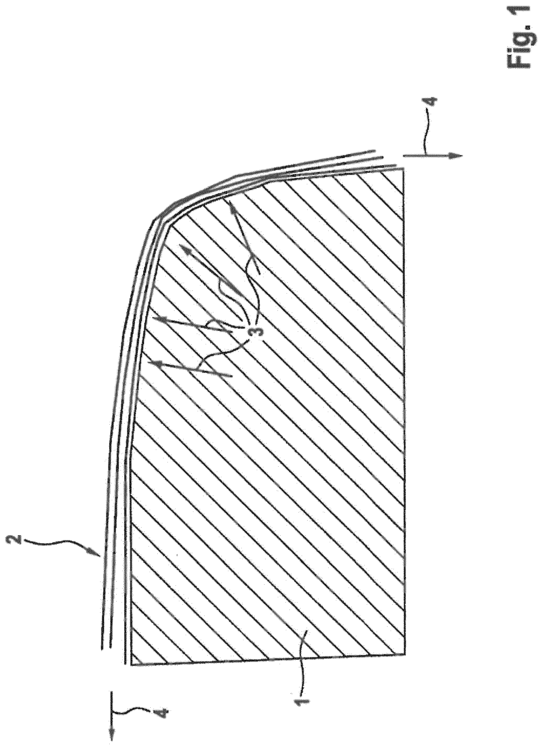

Figur 1 zeigt eine Unterseite 1 eines Werkzeugs zum Herstellen eines Faserverbundbauteils. An dessen Oberfläche ist eine Preform 2 angeordnet, die hier beispielsweise drei Preformlagen umfasst. Bezugszeichen 3 und 4 zeigen Bereiche, in denen besonders starke Kräfte auf die Preform beim Drapieren der Preformlagen einwirken. Im Bereich 3 des Werkzeugs 1 wirkt durch die starke Krümmung ein hoher Druck von unten auf die Preformlagen, die an dieser Stelle entsprechend dem Druck beim Drapieren komprimiert werden und ausdünnen. Preformlagen, in denen die Fasern quer zur Zugrichtung liegen, werden gedehnt. Je nach Reibung im Radius wirken die Zugkräfte in den Bereichen 3 und 4 unterschiedlich, so dass sich unterschiedliche Preform-Dicken ergeben. Weiterhin wird die

Dickenzunahme der Preform durch Scherung oder Stauchung berücksichtigt. Die einwirkenden Kräfte haben einen Einfluss auf die Ausbildung von Fehlstellen bzw. Lufteinschlüssen und Reinharzbereichen, sofern das der Spalt des Werkzeugs nicht entsprechend angepasst wird.

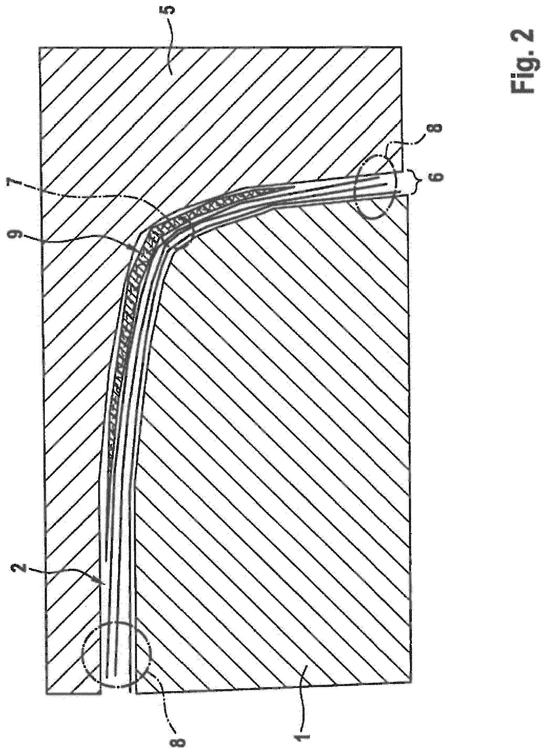

Figur 2 ist eine Schnittansicht durch ein Werkzeug zur Herstellung eines Faserverbundbauteils gemäß dem Stand der Technik. Das Werkzeug umfasst ein Werkzeugunterteil 1 und ein Werkzeugoberteil 5. Nach schließen des Werkzeugs ergibt sich zwischen dem Werkzeugunterteil 1 und dem Werkzeugoberteil 5 ein Spalt 6, in den hier beispielsweise ein Preform 2, die drei Preformlagen umfasst, eingebracht ist. Durch das Einlegen der Preformlagen und Drapieren derselben in dem Werkzeug haben Kräfte auf die Preform 2 eingewirkt, so dass diese, dort, wo ein hoher Druck auf die Preform 2 eingewirkt hat, einen verdichteten Bereich 7 mit niedrigem Faservolumengehalt und dort, wo hohe Zugkräfte eingewirkt haben, Bereiche 8 mit hohem Faservolumengehalt, aufweist. Insbesondere zwischen dem verdichteten Bereich 7 und dem Werkzeugoberteil 5 ist somit ein materialfreier Bereich und damit nach Verfüllen mit Matrixmaterial ein Reinharzbereich 9 entstanden, der für qualitative Inhomogenität in dem resultierenden Faserverbundbauteil sorgt.

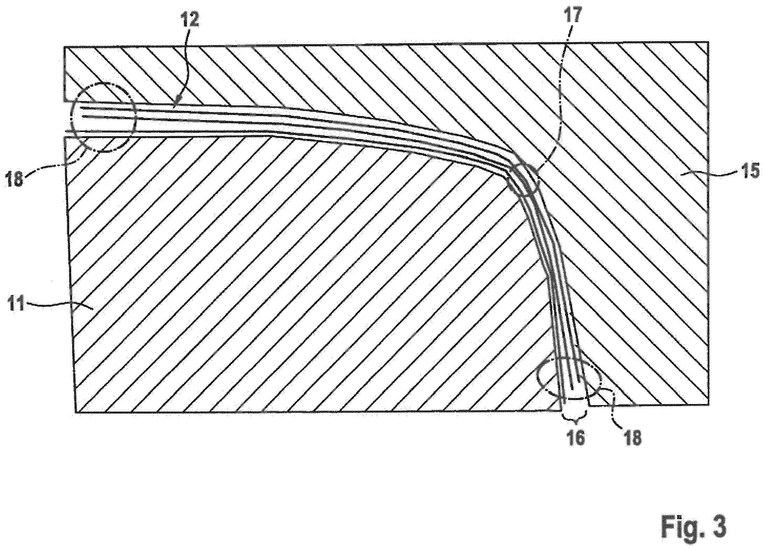

Figur 3 ist eine Schnittansicht durch ein Werkzeug zur Herstellung eines Faserverbundbauteils das gemäß einer Weiterbildung des erfindungsgemäßen Verfahrens hergestellt wurde. Das Werkzeug umfasst ein Werkzeugunterteil 11, ein Werkzeugoberteil 15 und einen dazwischenliegenden Spalt 16. In dem Spalt ist eine Preform 12 eingebracht, die hier beispielsweise aus drei Preformlagen gebildet ist. Auf die Preform 12 wirken dieselben Kräfte wie auf die Preform 2 in Figur 2, jedoch ist in Figur 3 die Spaltbreite des Werkzeugs erfindungsgemäß, basierend auf der zu erwartenden theoretischen Dicke der Preform 12, angepasst. Ferner vorteilhaft berücksichtigt sind sowohl die auf die Preform 12 einwirkenden Druckkräfte im Bereich 17 und Zugkräfte in den Bereichen 18, die sich direkt auf die Dicke der Preform 12 auswirken. Im Bereich 17 hat aufgrund der Krümmung des Werkzeugs in diesem Bereich ein hoher Druck auf die Preform 12 eingewirkt, was zu einer Verdichtung des faserhaltigen Materials und einem geringeren Faservolumenanteil geführt hat. Die Spaltbreite wurde demgemäß in diesem Bereich reduziert. In den Bereichen 18, wo starke Zugkräfte auf die Preform 12 eingewirkt haben, sind Bereiche mit hohem Faservolumenanteil entstanden und der Spalt 16 in diesem Bereich entsprechend erweitert. Somit werden Reinharzbereiche, Matrixmaterialfilme auf der Oberfläche des Faserverbundbauteils und Lufteinschlüsse bei der Bildung des Faserverbundbauteils effektiv vermieden.

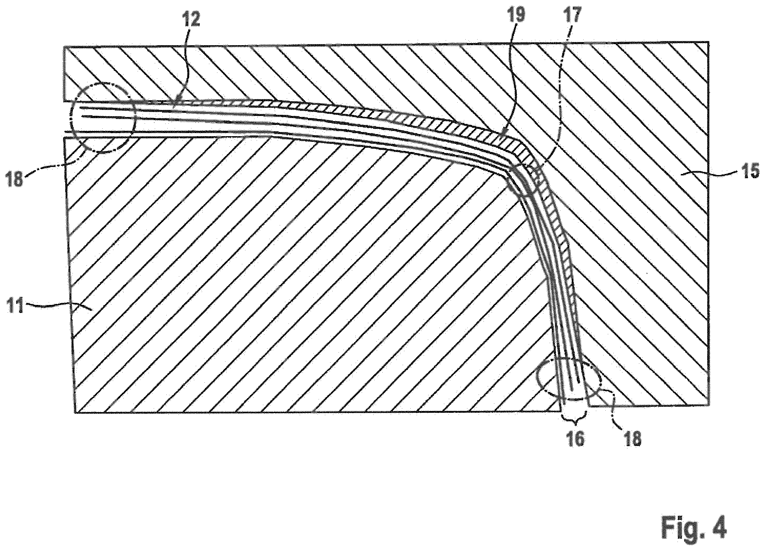

In Figur 4 ist dasselbe Werkzeug aus Figur 3 gezeigt, jedoch ist hier in die Werkzeugoberseite die Anpassungsfläche 19 eingezeichnet, die Bestandteil des Werkzeugoberteils 15 ist, und durch die Anpassung der Spaltbreite an die zu erwartende Dicke der Preform 12 zugefügt wurde, um eine optimale Spaltbreite bereitzustellen, die das Ausbilden von Reinharzbereichen effektiv verhindert.

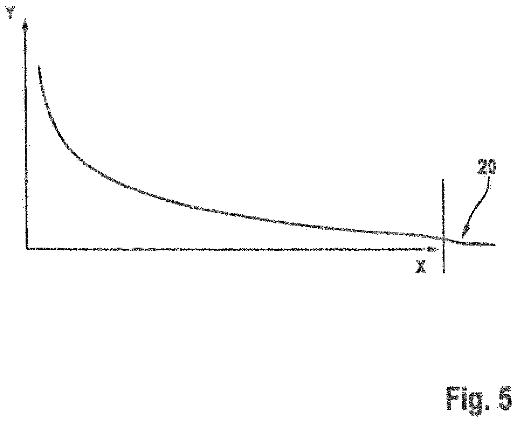

Figur 5 zeigt ein Diagramm zur Bestimmung der durch Kompression eines faserhaltigen Materials erhaltbaren minimalen Dicke. Auf der X-Achse wird dabei der Kompressionsdruck und auf der Y-Achse die Materialdicke aufgetragen. Die erhaltbare minimale Dicke ist dann erreicht, wenn bei weiter ansteigendem Druck eine irreversible Beschädigung oder Deformation des faserhaltigen Materials eintritt. Dies ist in der Grafik anhand der sprunghaften Absenkung der Materialdicke im Bereich 20 erkennbar. Durch graphische Auftragung der Materialdicke gegen den Kompressionsdruckes kann die erhaltbare minimale Dicke direkt aus dem Diagramm ausgelesen werden.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste:

- 1, 11: Werkzeugunterteil
- 2, 12: Preform
- 3: Bereich hohen Druckes
- 4: Bereich hohen Zuges
- 5, 15: Werkzeugoberteil
- 6, 16: Spalt
- 7, 17: Bereich mit niedrigem Faservolumengehalt
- 8, 18: Bereich mit hohem Faservolumengehalt
- 9: Reinharzbereich
- 19: Anpassungsfläche
- 20: Bereich der sprunghaften Absenkung der Fasermaterialdicke

## Patentansprüche

1. Verfahren zum Herstellen eines Werkzeugs für die Herstellung eines Faserverbundbauteils umfassend mindestens ein faserhaltiges Material und mindestens ein Matrixmaterial, wobei das Werkzeug mindestens ein Werkzeugoberteil (11), ein Werkzeugunterteil (15) und einen dazwischenliegenden Spalt (16) umfasst, **gekennzeichnet durch** die Schritte:
a) Bestimmen der zu erwartenden Dicke des faserhaltigen Materials in mindestens einem Bereich des faserhaltigen Materials und
b) Anpassen einer Breite des Spalts (16) des Werkzeugs gemäß der zu erwartenden Dicke des faserhaltigen Materials in dem entsprechenden Bereich des Spalts (16).

2. Verfahren nach Anspruch 1, **dadurch gekennzeichnet, dass** Schritt a) einen Schritt des Bestimmens der minimalen Dicke des faserhaltigen Materials umfasst.

3. Verfahren nach Anspruch 1 oder 2, **dadurch gekennzeichnet, dass** Schritt a) eine Anpassung der zu erwartenden Dicke des faserhaltigen Materials umfasst, in die Schereffekte und Effekte, erzeugt durch mechanische Einwirkung auf das faserhaltige Material beim Einlegen und Drapieren des faserhaltigen Materials in dem Werkzeug, eingehen.

4. Verfahren zum Herstellen eines Faserverbundbauteils umfassend mindestens ein faserhaltiges Material und mindestens einen Matrixmaterial in einem Werkzeug, wobei das Werkzeug mindestens ein Werkzeugoberteil (11), ein Werkzeugunterteil (15) und einen dazwischenliegenden Spalt (16) umfasst, unter Ausführung des Verfahrens nach einem der Ansprüche 1 bis 3, ferner umfassend die Schritte:
c) Einlegen des faserhaltigen Materials in das Werkzeug,
d) Schließen des Werkzeugs und
e) Einbringen mindestens eines Matrixmaterials.

5. Verfahren nach Anspruch 4, **dadurch gekennzeichnet, dass** Schritt a) einen Schritt des Bestimmens der minimalen Dicke des faserhaltigen Materials umfasst.

6. Verfahren nach Anspruch 4 oder 5, **dadurch gekennzeichnet, dass** Schritt a) eine Anpassung der zu erwartenden Dicke des faserhaltigen Materials umfasst, in die Schereffekte und Effekte, erzeugt durch mechanische Einwirkung auf das faserhaltige Material beim Einlegen und Drapieren des faserhaltigen Materials in dem Werkzeug, eingehen.

7. Verfahren nach einem der Ansprüche 4 bis 6, **dadurch gekennzeichnet, dass** das faserhaltige Material eine Preform (12) oder ein Prepreg, vorzugsweise eine Preform ist.

8. Verfahren nach Anspruch 7, **dadurch gekennzeichnet, dass** die Preform (12) mindestens eine Lage eines Fasergeleges, Fasergeflechts, Fasergewirkes oder Fasergestrickes umfasst.

## Claims

1. A method for producing a tool for producing a fibre composite component comprising at least one fibre-containing material and at least one matrix material, wherein the tool comprises at least an upper tool part (11), a lower tool part (15) and a gap (16) inbetween, **characterised by** the following steps:
a) determining the thickness which is to be expected of the fibre-containing material in at least one region of the fibre-containing material, and
b) adapting a width of the gap (16) of the tool in accordance with the thickness which is to be expected of the fibre-containing material in the corresponding region of the gap (16).

2. A method according to Claim 1, **characterised in that** step a) comprises a step of determining the minimum thickness of the fibre-containing material.

3. A method according to Claim 1 or 2, **characterised in that** step a) comprises an adaptation of the thickness which is to be expected of the fibre-containing material, in which shear effects and effects produced by mechanical action on the fibre-containing material upon laying and draping the fibre-containing material in the tool are included.

4. A method for producing a fibre composite component comprising at least one fibre-containing material and at least one matrix material in a tool, wherein the tool comprises at least an upper tool part (11), a lower tool part (15) and a gap (16) inbetween, while carrying out the method according to one of Claims 1 to 3, further comprising the following steps:
c) laying the fibre-containing material in the tool,
d) closing the tool, and
e) introducing at least one matrix material.

5. A method according to Claim 4, **characterised in that** step a) comprises a step of determining the minimum thickness of the fibre-containing material.

6. A method according to Claim 4 or Claim 5, **characterised in that** step a) comprises an adaptation of the thickness which is to be expected of the fibre-containing material, in which shearing effects and effects produced by mechanical action on the fibre-containing material upon laying and draping the fibre-containing material in the tool are involved.

7. A method according to one of Claims 4 to 6, **characterised in that** the fibre-containing material is a preform (12) or a prepreg, preferably a preform.

8. A method according to Claim 7, **characterised in that** the preform (12) comprises at least one layer of a laid fibre fabric, braided fibre, interlaced fibre fabric or knitted fibre fabric.

## Revendications

1. Procédé de fabrication d'un outil pour permettre l'obtention d'une pièce composite fibreuse comprenant au moins un matériau renfermant des fibres et au moins un matériau formant matrice,
l'outil comprenant au moins une partie d'outil supérieure (11) une partie d'outil inférieure (15) et un intervalle (16) situé entre celles-ci, procédé **caractérisé en ce qu'**
il comprend des étapes consistant à :
a) déterminer l'épaisseur attendue du matériau renfermant des fibres dans au moins une zone de ce matériau, et
b) adapter la largeur de l'intervalle (16) de l'outil conformément à l'épaisseur attendue du matériau renfermant des fibres dans la zone correspondante de l'intervalle (16).

2. Procédé conforme à la revendication 1,
**caractérisé en ce que**
l'étape a) est une étape consistant à déterminer l'épaisseur minimum du matériau renfermant des fibres.

3. Procédé conforme à la revendication 1 ou 2,
**caractérisé en ce que**
l'étape a) comporte une adaptation de l'épaisseur attendue du matériau renfermant des fibres dans laquelle interviennent des effets de cisaillement et des effets produits par action mécanique sur le matériau renfermant des fibres lors de l'insertion et du drapage du matériau renfermant des fibres dans l'outil.

4. Procédé de fabrication d'une pièce composite fibreuse comportant au moins un matériau renfermant des fibres et au moins un matériau formant matrice dans un outil, l'outil comprenant au moins une partie d'outil supérieure (11) une partie d'outil inférieure (15) et un intervalle (16) situé entre celles-ci, par la mise en oeuvre du procédé conforme à l'une des revendications 1 à 3,
comportant en outre des étapes consistant à :
c) insérer le matériau renfermant des fibres dans l'outil,
d) fermer l'outil, et
e) introduire au moins un matériau formant matrice.

5. Procédé conforme à la revendication 4,
**caractérisé en ce que**
l'étape a) comporte une étape consistant à déterminer l'épaisseur minimum du matériau renfermant des fibres.

6. Procédé conforme à la revendication 4 ou 5,
**caractérisé en ce que**
l'étape a) comporte une adaptation de l'épaisseur attendue du matériau renfermant des fibres dans laquelle interviennent des effets de cisaillement et des effets produits par action mécanique sur le matériau renfermant des fibres lors de l'insertion et du drapage de ce matériau renfermant des fibres dans l'outil.

7. Procédé conforme à l'une des revendications 4 à 6,
**caractérisé en ce que**
le matériau renfermant des fibres est une préforme (12) ou un produit pré-imprégné, et est de préférence une préforme.

8. Procédé conforme à la revendication 7,
**caractérisé en ce que**
la préforme (12) comprend au moins une couche d'un matelas de fibres, d'un tressage de fibres, d'un tricot de fibres ou d'un tissu tricoté de fibres.
